# EUROPEAN PATENT APPLICATION

(11) **EP 3 015 167 A1**
(43) Date of publication of application: **04.05.2016**
(21) Application number: 14191316.0
(22) Date of filing: 31.10.2014
(51) Int. Cl.: B01J 37/02, B01J 29/072, B01J 29/14, B01J 29/24, B01J 29/46, B01J 29/76, B01D 53/94

(54) **Ammonia oxidation catalyst in scr system**

(71) Applicant: Heesung Catalysts Corporation, Siheung-si Gyeonggi-do 429-848 (KR)
(72) Inventor: Han, Hyun Sik, Seoul 138-842 (KR); Kim, Eun Seok, 426-743 Kyeonggi-do (KR)
(74) Representative: Regimbeau

(57) **Abstract**

Disclosed herein is an ammonia oxidation catalyst for converting nitrogen oxides generated from a mobile source or fixed source into harmless nitrogen using ammonia as a reductant and preventing the formation of nitrogen oxides due to the oxidation of ammonia. The ammonia oxidation catalyst includes selective catalytic reductive zeolite sequentially impregnated with platinum and copper.

## Description

### BACKGROUND OF THE INVENTION

### 1. Technical Field

The present invention relates to an ammonia oxidation catalyst for converting nitrogen oxides generated from a mobile source or fixed source into harmless nitrogen using ammonia as a reductant and preventing the formation of nitrogen oxides due to the oxidation of ammonia. More particularly, the present invention relates to an ammonia oxidation catalyst in which zeolite having selective reduction performance is sequentially impregnated with platinum and copper.

### 2. Description of the Related Art

Generally, in order to decrease the amount of nitrogen oxides (NOx) included in exhaust gas discharged from an internal combustion engine of a mobile source or fixed source, there is used a selective catalytic reduction (SCR) system using ammonia or an ammonia precursor as a reductant. Typically, in a SCR system for a mobile source, ammonia, as a reductant, is injected into an exhaust gas flow of an exhaust gas treatment apparatus provided with a reduction catalyst bed. The injected ammonia reduces a large amount of nitrogen oxides included in exhaust gas to water and nitrogen. In a SCR system for a mobile source or fixed source, when ammonia (NH₃) is used as a reductant, there is a problem in that ammonia (NH₃) cannot function as a reductant under the condition of imperfect conversion or a rise in exhaust gas temperature, and may thus leak from an exhaust port to raise ammonia slip attributable to the non-reaction of ammonia with NOx, thus causing secondary pollution. Here, the term "ammonia slip" is referred to as a phenomenon in which ammonia, as a reductant injected into a SCR system in order to remove nitrogen oxides included in exhaust gas discharged from an internal combustion engine of a mobile source or fixed source, does not participate in the reduction reaction of NOx because of various causes, and is discharged to the outside.

There are disclosed various conventional catalyst compositions for overcoming the ammonia slip.

First, Korean Patent Application Publication No. 2007-5443, filed by the present applicant, discloses a Cu-containing zeolite impregnated platinum. This disclosed Cu-containing zeolite impregnated with platinum, which is an ammonia oxidation catalyst, has excellent low-temperature activity, and can efficiently control the production of nitrogen oxides (NOx) attributable to side reactions.

Further, Korean Patent Application Publication No. 2009-114480 discloses an oxidation catalyst including platinum, copper, refractory metal oxide and zeolite. This oxidation catalyst is likely to be effective in removing ammonia at a low temperature of 300°C or lower. Specifically, there is disclosed a catalyst composition in which platinum-dispersed alumina or zeolite is mixed with copper-containing zeolite.

Further, Korean Patent Application Publication No. 2009-123920 discloses an ammonia oxidation catalyst in which a platinum precursor is uniformly dispersed. This ammonia oxidation catalyst is prepared by coating a cordierite substrate with a CuCHA-containing zeolite and then immersing this cordierite substrate coated with the zeolite into a platinum-containing precursor solution.

However, the above-mentioned ammonia oxidation catalysts cannot efficiently control nitrogen oxides (NOx) resulting from side reactions. That is, in these ammonia oxidation catalysts, it is likely that the production of NO by the side reaction of Reaction Formula 2 below is superior to the production of N2 by the reaction of Reaction Formula 1 below:

Reaction Formula 1 4NH₃ + 6NO → 5N₂ + 6H₂O

Reaction Formula 2 4NH₃ + 5O₂ -> 4NO + 6H₂O

The present invention intends to provide an ammonia oxidation catalyst for suppressing the production of NO by Reaction Formula 2 above and increasing the selectivity for N₂ (Reaction Formula 1).

Surprisingly, the present applicant found that an ammonia oxidation catalyst, which is prepared by impregnating ion-exchange zeolite, particularly, Cu or Fe ion-exchange zeolite, and more particularly, Cu ion-exchange beta-zeolite or Fe ion-exchange beta-zeolite with platinum and subsequently impregnating this platinum-impregnated zeolite with copper, optimizes the selectivity for N₂ in the reaction of ammonia with NOx. The ammonia oxidation catalyst of the present invention is characterized in that the zeolite is impregnated with 1.0 wt% or less of platinum based on the weight of zeolite, and is subsequently impregnated with 10 wt% or less of copper based on the weight of zeolite.

### SUMMARY OF THE INVENTION

Accordingly, the present invention has been devised to solve the above-mentioned problems, and an object of the present invention is to provide an ammonia oxidation catalyst which can suppress the formation of nitrogen oxides attributable to the oxidation reaction of ammonia in a selective catalytic reduction (SCR) system.

In order to accomplish the above object, an aspect of the present invention provides an ammonia oxidation catalyst in which ion-exchange zeolite is impregnated with platinum, and is subsequently impregnated with copper.

Another aspect of the present invention relates to a process for preparing an ammonia oxidation catalyst, comprising the following successive steps:
- impregnating an ion-exchange zeolite with platinum, and
- impregnating the obtained platinum impregnated zeolite with copper.

Another aspect of the present invention relates to an ammonia oxidation catalyst obtainable by a process comprising the following successive steps:
- impregnating an ion-exchange zeolite with platinum, and
- impregnating the obtained platinum impregnated zeolite with copper.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a graph comparing the ammonia conversion ratio and N₂ selectivity of a fresh Cu/Pt/Fe beta-zeolite oxidation catalyst (AOC #2) of the present invention with those of a comparative Pt/Cu/Fe beta-zeolite oxidation catalyst (AOC #1); and
FIG. 2 is a graph comparing the ammonia conversion ratio and N₂ selectivity of an aged Cu/Pt/Fe beta-zeolite oxidation catalyst (AOC #2) of the present invention with those of a comparative Pt/Cu/Fe beta-zeolite oxidation catalyst (AOC #1).

### DESCRIPTION OF THE PREFERRED EMBODIMENTS

Hereinafter, preferred embodiments of the present invention will be described in detail with reference to the attached drawings.

The present invention provides an ammonia oxidation catalyst in which the surface or pores of selective catalytic reductive zeolite is primarily impregnated with a precious metal (platinum, palladium or rhodium) and is subsequently impregnated with copper.

As used herein, the term "selective catalytic reductive zeolite" is referred to as zeolite in which Cu or Fe exists in the ion exchange site located on the backbone of zeolite as a metal cation. This type of zeolite is commonly known to selectively reduce NOx using a reductant in the SCR reaction. In the present invention, zeolite may be selected from among natural or synthetic aluminosilicate zeolite, ZSM5, Zeolite Y, β Zeolite, γ Zeolite, mordenite and CHA. Therefore, it is preferred that the selective catalytic reductive zeolite according to the present invention be beta-zeolite ion-exchanged with Fe or Cu.

According to the present invention, the selective catalytic reductive zeolite is impregnated with a precious metal selected from the group consisting of platinum, palladium and rhodium in an amount of 1.0 wt% or less. When the amount of the precious metal is more than 1.0 wt%, Reaction Formula 2 above is superior to Reaction Formula 1, and thus N₂ selectivity decreases. As used herein, the term "N₂ selectivity" means that ammonia is converted into nitrogen gas and water while being not formed into nitrogen oxides by a side reaction. Further, as used herein, the term "impregnation" means that zeolite is immersed in an aqueous precious metal salt solution or an aqueous non-metallic salt solution to allow the surface or pores of the zeolite to be coated with a metal component. This impregnation may be carried out by various methods, for example, capillary impregnation and diffusion impregnation, as understood by those skilled in the art. When the zeolite is impregnated with precious metal components or non-metallic components, these components may be distributed in the pores of the zeolite as well as on the surface of the zeolite.

According to the present invention, the zeolite primarily impregnated with a precious metal may be subsequently impregnated with Cu or Fe. The order of such sequential impregnation is a very important factor of the present invention. Regardless of theory, when a precious metal is impregnated prior to a copper or iron component, that is, when a precious metal is laminated on a copper or iron component, N₂ selectivity rapidly decreases. The catalytic material structure formed by the order of impregnation according to the present invention is expressed by Cu or Fe/precious metal (for example, platinum) selective catalytic reductive zeolite, which is differentiated from precious metal (for example, platinum)/Cu or Fe/selective catalytic reductive zeolite.

According to the present invention, the selective catalytic reductive zeolite is primarily impregnated with platinum (Pt) by depositing a platinum precursor compound or complex on the zeolite. Examples of the platinum precursor compound or complex, may include, but are not limited to, platinum chloride, platinum hydroxide, platinum amine, etc. After the primary impregnation of the zeolite with platinum, the platinum-impregnated zeolite may be fixed with an acidic component (for example, acetic acid) or a basic component (for example, ammonium hydroxide), and may be chemically reduced, calcined or directly used.

According to the present invention, when the platinum-impregnated selective catalytic reductive zeolite is secondarily impregnated with Cu, Cu may be derived from the following copper compounds. Copper ions of copper compounds may be bivalent or trivalent ions. Examples of the copper compounds may include copper nitrate, copper chloride, copper oxide, copper sulfate, copper oxalate, copper acetate, copper carbonate, copper hydroxide, ammonium copper chloride, ammonium copper hydroxide), ammonium copper phosphate, and the like. Preferably, the copper compound may be copper nitrate or copper acetate. Here, the amount of copper impregnated in the zeolite may be 10 wt% or less based on the total amount of the catalyst. When the amount thereof is more than 10 wt%, the effect of increasing catalytic activity is not exhibited, and economic gains cannot be obtained.

The present invention further relates to a process for preparing an ammonia oxidation catalyst, comprising the following successive steps:
- impregnating an ion-exchange zeolite with platinum, and
- impregnating the obtained platinum impregnated zeolite with copper.

Preferred embodiments of the process of the invention are as described above in relation with the ammonia oxidation catalyst.

The present invention is also drawn to an ammonia oxidation catalyst obtainable by a process comprising the following successive steps:
- impregnating an ion-exchange zeolite with platinum, and
- impregnating the obtained platinum impregnated zeolite with copper.

Preferred embodiments of the ammonia oxidation catalyst obtainable by the process of the invention described above are as described in relation with the ammonia oxidation catalyst above.

The zeolite treated by the present invention may be applied on a substrate. According to embodiments of the present invention, as a substrate for an ammonia oxidation catalyst, any substrate for preparing a catalyst for automobiles may be used. Generally, the substrate for an ammonia oxidation may be a metal or ceramic honeycomb structure. For example, the substrate for an ammonia oxidation may be a monolithic substrate in which a plurality of gas passages is continuously disposed in parallel from an inlet to an outlet to be opened to fluid flow. Through these linear gas passages, a catalytic material comes into contact with exhaust gas partitioned by a wash-coated wall. The gas passages of the monolithic substrate are thin wall channels having an arbitrary sectional shape, for example, a trapezoid, a rectangle, a square, a sine wave, a hexagon, an oval, a circle or the like. Such a monolithic substrate may have about 60 to 1200 gas inflow ports (that is, cells) per square inch (cpsi). A commercially available substrate may be made of cordierite (Corning 400/6 cordierite) having a cell density of 400 and a wall thickness of 6 mm. It can be understood that the substrate of the present invention is not limited to a specific shape, material or shape. For example, a ceramic substrate may be made of an arbitrary refractory material such as cordierite, cordierite-α alumina, silicon nitride, alumina-silica magnesia, zirconium silicate, magnesium silicate, α alumina, aluminosilicate or the like.

The method of applying a catalyst layer onto a substrate according to the present invention is well known to those skilled in the art. Briefly explaining this method, first, fine catalyst particles made of Cu/Pt/Fe zeolite are suspended in a proper medium, for example, water to form slurry.

Generally, the slurry is pulverized such that all the solids thereof have an average particle size of less than 10 µm, that is, 0.1 to 8 µm. The pH of the suspension or slurry is about 2 to 7. The substrate may be coated with the slurry using a typical coating machine such that a desired amount of a catalytic material adheres to the inner walls of gas passages of the substrate. Thereafter, the substrate coated with the slurry is dried at about 100°C and then calcined at 300∼650°C for 1 to 3 hours. After the calcinations of the substrate, the amount of the catalyst supported in the substrate may be determined by calculating the difference in weight of the catalyst between before and after the coating of the substrate. As is obvious to those skilled in the art, the amount of the supported catalyst may be adjusted by changing the solid content or viscosity of the slurry applied on the substrate. Generally, the amount of the wash-coating solution charged in the passages of the substrate may be about 0.2 to 3.0 g/in³.

Hereinafter, the present invention will be described in more detail with reference to the following Examples. However, these Examples are set forth to illustrate the present invention, and the scope of the invention is not limited thereto.

### Example 1: Preparation of Cu/Pt/Fe beta-zeolite oxidation catalyst

Fe beta-zeolite powder was immersed in a basic Pt(IV) precursor (platinum hydroxylamine complex) solution, the pH of surface thereof was lowered, and organic acid for precipitating Pt(IV) was added to fix Pt(IV) in zeolite, thus obtaining platinum-impregnated zeolite. The obtained platinum-impregnated zeolite was dried at 110°C, and was then calcined at 450°C for 1 hour to obtain platinum-impregnated zeolite powder. The obtained platinum-impregnated zeolite powder was immersed in a 0.25M copper acetate solution at room temperature for 5 minutes to fix Cu in the platinum-impregnated zeolite powder, thus obtaining Cu/Pt/Fe beta-zeolite. The obtained Cu/Pt/Fe beta-zeolite was dried at 110°C, and was then calcined at 550°C for 1 hour to obtain Cu/Pt/Fe beta-zeolite powder. The obtained Cu/Pt/Fe beta-zeolite powder was emulsified in deionized water to obtain a slurry having a solid content of about 40%, the obtained slurry was pulverized by a standard ball mill to have a particle size distribution in which 90% of particles have a particle diameter of 10 µm or less, and then the pulverized slurry was applied on a standard cylindrical ceramic monolith having a length of 1.0" OD X 3.0", a cell density of 400 cells/in² and a wall thickness of 6 mm. The application of the slurry on the monolith was performed by immersing the monolith in the slurry in parallel with a channel, removing excessive slurry using airflow and then drying and calcining the slurry applied on the monolith. In this way, a fresh ammonia oxidation catalyst, in which the Fe beta-zeolite (1.0 g/in³) applied on the monolith had been impregnated with 1.0 wt% of platinum (Pt) based on the weight of the Fe beta-zeolite and subsequently had been impregnated with 10.0 wt% of copper (Cu), was obtained. The fresh ammonia oxidation catalyst was exposed to an atmosphere of a water vapor content of about 10% or more at about 800°C for 5 to 25 hours to obtain an aged ammonia oxidation catalyst.

### Comparative Example 1: Preparation of Pt/Cu/Fe beta-zeolite oxidation catalyst

The Pt/Cu/Fe beta-zeolite oxidation catalyst of Comparative Example 1 was prepared in the same manner as in Example 1, except that the order of impregnation was changed. That is, Fe beta-zeolite powder was primarily impregnated with a copper acetate solution to fix copper in the Fe beta-zeolite powder, and then the copper-impregnated Fe beta-zeolite powder was secondarily impregnated with a basic Pt(IV) precursor (platinum hydroxylamine complex) solution to disperse platinum on the copper, thereby preparing a Pt/Cu/Fe beta-zeolite oxidation catalyst.

The evaluation tests of the oxidation catalyst of the present invention and comparative oxidation catalyst were carried out under the same conditions of injected gas composition: NH3 350∼390 ppm, NOx concentration 30ppm, 5.0% H₂O, 5.0% O₂, N₂ balance and space velocity: 40,000 L/h.

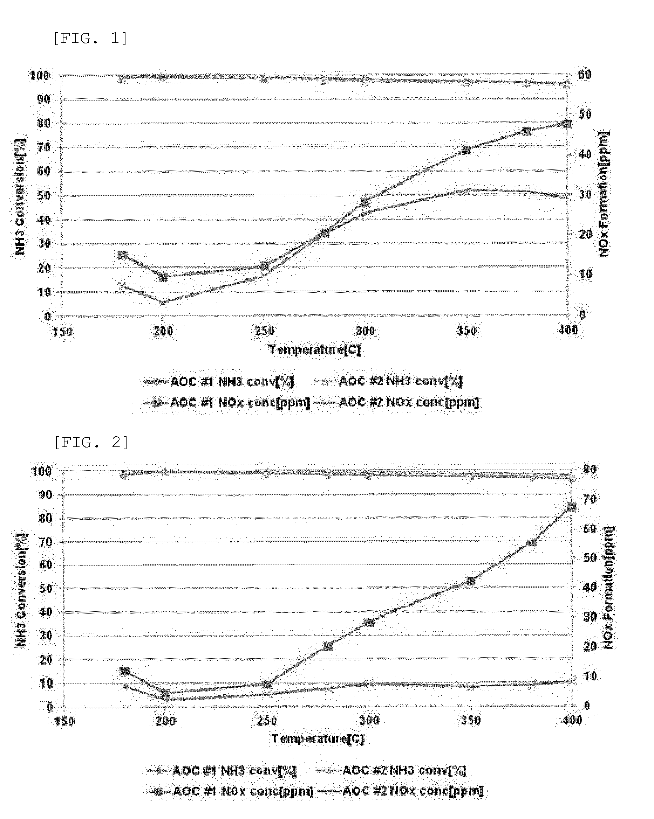

FIG. 1 is a graph comparing the ammonia conversion ratio and N₂ selectivity of a fresh Cu/Pt/Fe beta-zeolite oxidation catalyst (AOC #2) of the present invention with those of a comparative Pt/Cu/Fe beta-zeolite oxidation catalyst (AOC #1); and FIG. 2 is a graph comparing the ammonia conversion ratio and N₂ selectivity of an aged Cu/Pt/Fe beta-zeolite oxidation catalyst (AOC #2) of the present invention with those of a comparative Pt/Cu/Fe beta-zeolite oxidation catalyst (AOC #1).

From the evaluation results thereof, it can be ascertained that the ammonia conversion ratio of the oxidation catalyst of the present invention is nearly equal to that of the comparative oxidation catalyst, but the N₂ formation rate, that is, N₂ selectivity of the fresh Cu/Pt/Fe beta-zeolite oxidation catalyst of the present invention is higher than that of the comparative Pt/Cu/Fe beta-zeolite oxidation catalyst, and, particularly, the N₂ formation rate, that is, N₂ selectivity of the aged Cu/Pt/Fe beta-zeolite oxidation catalyst of the present invention is far higher than that of the comparative Pt/Cu/Fe beta-zeolite oxidation catalyst.

As described above, according to the ammonia oxidation catalyst of the present invention, the formation of nitrogen oxides attributable to the oxidation reaction of ammonia in the SCR system can be suppressed, that is, the selectivity of nitrogen (N₂) can be increased. Further, according to the ammonia oxidation catalyst of the present invention, the formation of nitrogen oxides from slipped or wasted ammonia in the SCR system of a mobile source or fixed source can be minimized, and simultaneously ammonia can be effectively removed.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An ammonia oxidation catalyst, in which ion-exchange zeolite is impregnated with platinum, and is subsequently impregnated with copper.

2. The ammonia oxidation catalyst of claim 1, wherein the ion-exchange zeolite is Cu ion-exchange zeolite or Fe ion-exchange zeolite.

3. The ammonia oxidation catalyst of claim 1, wherein the zeolite is beta-zeolite, ZSM5, zeolite Y, mordenite or CHA.

4. The ammonia oxidation catalyst of claim 1, wherein THE ion-exchange zeolite is impregnated with 1.0 wt% or less of platinum, and is subsequently impregnated with 10 wt% or less of copper.

5. Process for preparing an ammonia oxidation catalyst, comprising the following successive steps:
- impregnating an ion-exchange zeolite with platinum, and
- impregnating the obtained platinum impregnated zeolite with copper.
